# FASCICULE DE BREVET EUROPEEN

(11) **EP 4 028 660 B1**
(45) Date de publication et mention de la délivrance du brevet: **09.08.2023**
(21) Numéro de dépôt: 20768609.8
(22) Date de dépôt: 10.09.2020
(51) Int. Cl.: F02K 1/80, F02K 1/82

(54) **ORGANE DE TUYÈRE EXTÉRIEUR POUR TURBOMACHINE**
AUSSENDÜSENELEMENT FÜR EINE TURBOMASCHINE
EXTERIOR NOZZLE MEMBER FOR A TURBOMACHINE

(30) Priorité: 13.09.2019 FR 1910149
(43) Date de publication de la demande: 20.07.2022
(73) Titulaire: Safran Nacelles, 76700 Gonfreville-l'Orcher (FR)
(72) Inventeur: CHAPELLE, Olivier, 77550 MOISSY-CRAMAYEL (FR); KOSTIN, Dimitri, 77550 MOISSY-CRAMAYEL (FR); BEAUVAIS, Clotaire, 77550 MOISSY-CRAMAYEL (FR)
(74) Mandataire: Argyma
(86) Numéro de dépôt international: PCT/EP2020/075418
(87) Numéro de publication internationale: WO 2021/048323

(56) Documents cités:
- FR-A1- 2 873 167
- FR-A1- 2 935 753
- FR-A1- 2 949 820

## Description

### DOMAINE TECHNIQUE

La présente invention concerne le domaine des tuyères pour turbomachine et vise plus particulièrement un organe de tuyère extérieur.

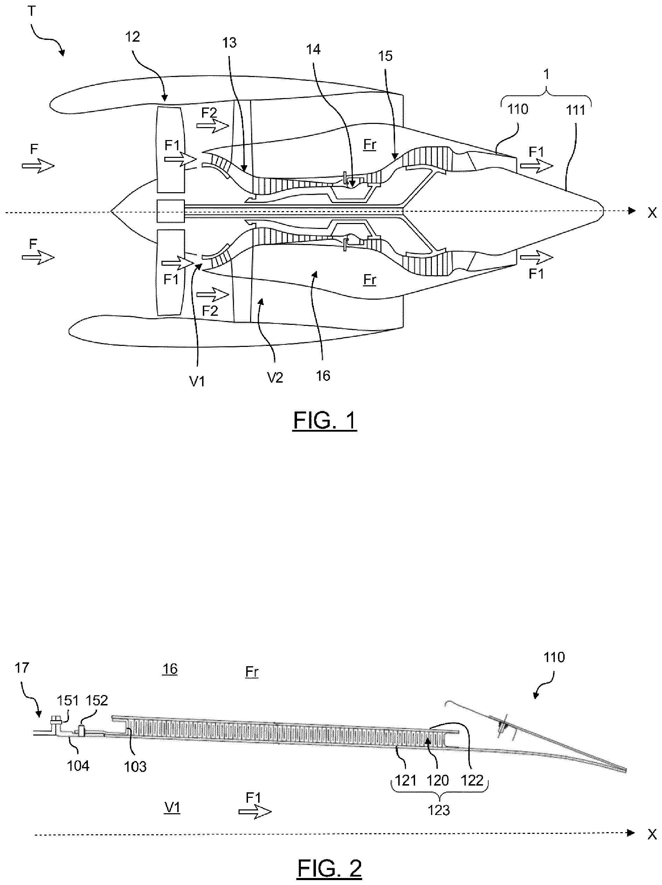

De manière connue, un aéronef comporte une ou plusieurs turbomachines, en particulier un turboréacteur T dans l'exemple de la figure 1, s'étendant longitudinalement selon un axe X et permettant de déplacer l'aéronef à partir d'un flux d'air F entrant dans le turboréacteur T et circulant d'amont en aval. Par la suite, les termes « amont » et « aval » sont définis par rapport à l'axe X orienté d'amont en aval. De même, les termes « intérieur » et « extérieur » sont définis selon la direction radiale par rapport à l'axe X.

Dans l'exemple de la figure 1 illustrant un turboréacteur T à double flux, le turboréacteur T comprend une veine primaire V1 radialement intérieure et une veine secondaire V2 radialement extérieure par rapport à l'axe X, configurées pour conduire selon l'axe X respectivement une partie radialement intérieure du flux d'air F, dite flux primaire F1, et une partie radialement extérieure du flux d'air F, dite flux secondaire F2. Le turboréacteur T comprend également une cavité annulaire 16 d'axe X séparant radialement la veine primaire V1 et la veine secondaire V2.

De manière connue, toujours en référence à la figure 1, le turboréacteur T comprend d'amont en aval une soufflante 12 pour comprimer et guider le flux d'air F vers la veine primaire V1 et la veine secondaire V2, un compresseur 13 permettant la compression du flux primaire F1, une chambre de combustion 14 de gaz avec le flux primaire F1 permettant de dégager l'énergie nécessaire à la mise en rotation d'aubes de la turbine 15 entraînant elle-même en rotation le compresseur 13 et la soufflante 12. La turbine 15 comprend un carter de turbine délimitant de manière radialement extérieure la veine primaire V1.

De manière connue, toujours en référence à la figure 1, un aéronef comprend également une tuyère 1 montée sur le carter de turbine pour guider le flux primaire F1 hors du turboréacteur T. La tuyère 1 comprend un organe de tuyère intérieur 111 et un organe de tuyère extérieur 110 s'étendant de manière périphérique autour de l'axe X et délimitant respectivement de manière radialement intérieure et de manière radialement extérieure la veine primaire V1.

Comme illustré sur la figure 2, l'organe de tuyère extérieur 110 comprend un panneau d'atténuation acoustique 123 du bruit émis par l'éjection du flux primaire F1. De manière connue, le panneau d'atténuation acoustique 123 comprend une structure d'atténuation acoustique 120, une paroi intérieure 121, montée sur une face intérieure de la structure d'atténuation acoustique 120 et en contact avec le flux primaire F1, et une paroi extérieure 122, montée sur une face extérieure de la structure d'atténuation acoustique 120. De manière connue, la structure d'atténuation acoustique 120 se présente sous la forme d'une structure en nid d'abeille. La paroi intérieure 121 comprend quant à elle une pluralité d'orifices (non représentés) pour permettre la circulation du flux primaire F1 dans la structure d'atténuation acoustique 120, de manière à atténuer les ondes acoustiques émises.

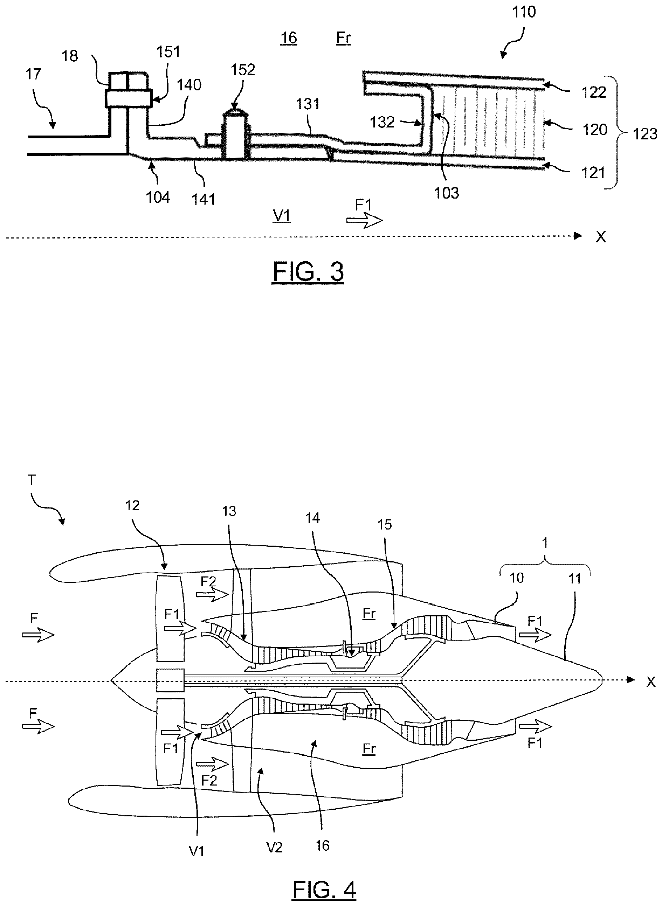

En référence aux figures 2 et 3, pour permettre le montage de l'organe de tuyère extérieur 110 sur le carter de la turbine, l'organe de tuyère extérieur 110 comprend une bride de tuyère 104 configurée pour être fixée à une bride de carter de turbine 17 située en aval du carter de la turbine 15. Comme illustrée sur la figure 3 représentant une vue rapprochée de la figure 2, la bride de tuyère 104 comprend une branche de fixation 140 annulaire radiale reliée à une branche longitudinale 141 annulaire par rapport à l'axe X. La branche de fixation 140 est située en amont de la branche longitudinale 141 comme illustré à la figure 3. De manière analogue, la bride de carter de turbine 17 comprend une branche de fixation 18 annulaire radiale, configurée pour être reliée à la branche de fixation 140 de la bride de tuyère 104 par des organes de fixation amont 151, tels que des ensembles d'une vis et d'un écrou à titre d'exemple, c'est-à-dire, un boulonnage.

Toujours en référence aux figures 2 et 3, l'organe de tuyère extérieur 110 comprend en outre un organe d'étanchéité 103, configuré d'une part pour protéger la structure d'atténuation acoustique 120, en particulier sa partie amont, et d'autre part pour relier la bride de tuyère 104 au panneau d'atténuation acoustique 123. Lors du montage, la branche longitudinale 141 de la bride de tuyère 104 est alignée avec la paroi intérieure 121. L'organe d'étanchéité 103 est quant à lui monté extérieurement à la branche longitudinale 141 de la bride de tuyère 104 et à la paroi intérieure 121 de manière à assurer l'étanchéité à leur interface sans perturber l'écoulement du flux primaire F1, comme représenté sur la figure 3. Pour fixer l'organe d'étanchéité 103, son extrémité amont 131 est reliée à la branche longitudinale 141 de la bride de tuyère 104 par des organes de fixation aval 152 tandis que son extrémité aval 132 est solidarisée à la paroi intérieure 121, à la structure d'atténuation acoustique 120 et à la paroi extérieure 122. En pratique, l'extrémité aval 132 de l'organe d'étanchéité 103 se présente sous la forme d'une pièce en U brasée à la paroi intérieure 121 et à la paroi extérieure 122, comme illustré à la figure 3.

Lors du fonctionnement du turboréacteur T, le flux primaire F1 est éjecté de la turbine 15 à haute température, de l'ordre de 600°C, ce qui échauffe la branche longitudinale 141 de la bride de tuyère 104 ainsi que la paroi intérieure 121. Afin de permettre un refroidissement de l'organe de tuyère extérieur 110, un flux d'air de refroidissement Fr à basse température, de l'ordre de 300°C, circule dans la cavité annulaire 16 et entre en contact avec la paroi extérieure 122, l'organe d'étanchéité 103 et une partie de la bride de tuyère 104.

De manière connue, l'organe d'étanchéité 103 et la bride de tuyère 104 comportent un alliage de titane résistant aux hautes températures pour assurer leur tenue mécanique et thermique lors du fonctionnement du turboréacteur T. Toutefois, un tel alliage de titane possédant un coût élevé, il a été proposé d'utiliser une bride de tuyère 104 réalisée dans des alliages ayant un coût plus réduit. A titre d'exemple, il a été proposé de réaliser une bride de tuyère 104 en inconel, et notamment de l'inconel 718 de formule brute NiCr19Fe19Nb5Mo3. Si l'inconel présente une très bonne tenue mécanique et thermique, celui-ci présente toutefois un coefficient de dilatation thermique environ 1,5 fois plus élevé qu'un alliage de titane. En pratique, lors du fonctionnement du turboréacteur T, la bride de tuyère 104 se dilate de manière plus importante que l'organe d'étanchéité 103. Une telle dilatation différentielle augmente le niveau de contrainte mécanique dans l'organe de tuyère extérieur 110, ce qui n'est pas souhaitable.

L'invention vise ainsi à éliminer au moins certains des inconvénients liés à l'utilisation d'une bride de tuyère 104 réalisée dans un alliage ayant un coefficient de dilatation thermique différent.

De manière incidente, pour une bride de tuyère de matériau quelconque, on connaît par la demande de brevet FR2949820A1 un organe de tuyère extérieur dont le panneau d'atténuation acoustique est relié par des moyens de liaison à une bride fixée à la turbine en amont. Les moyens de liaison ne permettent pas de protéger thermiquement la bride.

Par ailleurs, la demande de brevet FR2873167A1 enseigne de relier un organe de tuyère extérieur à un turbomoteur d'aéronef par deux brides.

### PRESENTATION DE L'INVENTION

L'invention concerne un organe de tuyère extérieur pour turbomachine s'étendant longitudinalement selon un axe X orienté d'amont en aval, ladite turbomachine comprenant au moins une veine primaire configurée pour conduire un flux primaire d'amont en aval et au moins une cavité annulaire d'axe X dans laquelle circule un flux d'air de refroidissement, ladite turbomachine comprenant au moins un carter de turbine monté selon l'axe X en amont de l'organe de tuyère extérieur et comprenant au moins une bride de carter de turbine s'étendant à l'aval du carter de turbine, ledit organe de tuyère extérieur étant configuré pour délimiter de manière radialement extérieure la veine primaire par rapport à l'axe X en sortie de la turbomachine, ledit organe de tuyère extérieur comprenant :
- au moins une structure d'atténuation acoustique comprenant une face intérieure et une face extérieure,
- au moins une paroi intérieure montée sur la face intérieure de la structure d'atténuation acoustique et tournée vers la veine primaire et
- au moins une paroi extérieure montée sur la face extérieure de la structure d'atténuation acoustique et tournée vers la cavité annulaire, ladite structure d'atténuation acoustique, ladite paroi intérieure et ladite paroi extérieure formant un panneau d'atténuation acoustique,
- au moins une bride de tuyère reliée au panneau d'atténuation acoustique et comprenant au moins une extrémité amont configurée pour être reliée à la bride de carter de turbine et
- au moins un organe d'étanchéité relié au panneau d'atténuation acoustique et comprenant au moins une branche longitudinale intérieure par rapport à l'axe X.

L'invention est remarquable en ce que la branche longitudinale intérieure de l'organe d'étanchéité s'étend de manière radialement intérieure à la bride de tuyère par rapport à l'axe X, de manière à protéger thermiquement ladite bride de tuyère du flux primaire.

Grâce à l'invention, l'organe d'étanchéité possède une double fonction, à savoir qu'il assure l'étanchéité de la fixation entre la tuyère et la turbine et agit comme une barrière thermique pour la bride de tuyère. La température de la bride de tuyère est ainsi plus faible, ce qui réduit sa dilatation et ainsi améliore sa tenue mécanique lors de l'utilisation de la turbomachine.

Selon l'invention, la bride de tuyère est réalisée dans un premier matériau et l'organe d'étanchéité est réalisé dans un deuxième matériau, le premier matériau possédant un coefficient de dilatation thermique supérieur à celui du deuxième matériau, de préférence supérieur d'au moins 25%, de préférence encore supérieur d'au plus 75%. De manière avantageuse, la bride de tuyère possède une température globalement plus faible que l'organe d'étanchéité et un coefficient de dilatation thermique plus important que l'organe d'étanchéité, de manière à ce que la bride de tuyère et l'organe d'étanchéité se dilatent de manière comparable. Le niveau de contrainte mécanique de la fixation entre l'organe de tuyère extérieur et le carter de turbine est ainsi réduit.

De préférence, le premier matériau est de l'inconel, préférentiellement de l'inconel 718 de formule brute NiCr19Fe19Nb5Mo3, et le deuxième matériau est un alliage de titane. L'inconel présente avantageusement une tenue mécanique supérieure à celle d'un alliage de titane et un coût réduit.

Selon un aspect de l'invention, l'organe d'étanchéité et la bride de tuyère sont reliés ensemble au panneau d'atténuation acoustique, de préférence par des organes de fixation aval, de préférence encore se présentant sous la forme d'ensembles d'une vis et d'un écrou. Une telle fixation facilite le montage et réduit les mouvements relatifs entre l'organe d'étanchéité et la bride de tuyère.

Selon un autre aspect de l'invention, la branche longitudinale intérieure de l'organe d'étanchéité comprend au moins une portion aval montée de manière radialement extérieure à la paroi intérieure par rapport à l'axe X. La branche longitudinale intérieure assure avantageusement une double fonction, à savoir protéger la bride de tuyère et assurer la fixation avec le panneau d'atténuation acoustique.

Selon un aspect préféré, la branche longitudinale intérieure de l'organe d'étanchéité comprend au moins une portion amont s'étendant dans la continuité de la paroi intérieure en saillie vers l'amont, de préférence jusqu'à la position axiale de l'extrémité amont de la bride de tuyère. La paroi amont forme ainsi une barrière thermique pour la bride de tuyère tout en définissant la veine primaire en sortie de la turbomachine, ce qui limite l'encombrement, le coût et facilite le montage.

Selon un autre aspect préféré, la paroi intérieure s'étend en saillie vers l'amont, de préférence jusqu'à la position axiale de l'extrémité amont de la bride de tuyère. Une telle paroi intérieure assure une protection efficace de la bride de tuyère et permet d'augmenter l'aérodynamisme dans la veine primaire.

Préférentiellement, la branche longitudinale intérieure de l'organe d'étanchéité est séparée de la bride de carter de turbine par un jeu de montage calibré, de manière à éviter de générer de l'usure par contact lors de l'utilisation de la turbomachine.

Selon un aspect de l'invention, l'organe d'étanchéité comprend au moins une branche longitudinale extérieure montée de manière radialement intérieure à la paroi extérieure par rapport à l'axe X et au moins une branche radiale reliant ladite branche longitudinale extérieure et la branche longitudinale intérieure de l'organe d'étanchéité. Un tel organe d'étanchéité en forme de U permet un montage aisé et rigide sur le panneau d'atténuation acoustique par brasage à la paroi intérieure et à la paroi extérieure.

Selon un aspect de l'invention, l'extrémité amont de la bride de tuyère se présente sous la forme d'au moins une branche de fixation s'étendant radialement par rapport à l'axe X et configurée pour être reliée à une branche de fixation de la bride de carter de turbine, de préférence par des organes de fixation amont, de préférence encore se présentant sous la forme d'ensembles d'une vis et d'un écrou. Une telle fixation présente une grande résistance mécanique tout en possédant une certaine souplesse radiale.

De préférence, la branche de fixation de la bride de tuyère comporte un bord festonné, de manière à apporter de la souplesse à la fixation entre la bride de carter de turbine et la bride de tuyère ainsi qu'à réduire la masse embarquée.

Selon un aspect de l'invention, la bride de tuyère comprend au moins une branche longitudinale intérieure reliée à l'extrémité amont, au moins une branche longitudinale extérieure et au moins une branche radiale reliant la branche longitudinale intérieure et la branche longitudinale extérieure de la bride de tuyère par rapport à l'axe X. L'extrémité aval se présente ainsi en forme de U qui s'intègre aisément avec l'organe d'étanchéité, tout en limitant l'encombrement.

Selon un aspect préféré, la branche longitudinale extérieure de la bride de tuyère s'étend en saillie vers l'amont par rapport à la branche radiale de la bride de tuyère, ce qui permet un montage aisé et facile d'accès au panneau d'atténuation acoustique.

Selon un autre aspect préféré, la branche longitudinale extérieure de la bride de tuyère s'étend en saillie vers l'aval par rapport à la branche radiale de la bride de tuyère, ce qui augmente la souplesse radiale de la fixation avec le panneau d'atténuation acoustique.

Selon un aspect de l'invention, la branche longitudinale extérieure de la bride de tuyère est reliée à la branche longitudinale extérieure de l'organe d'étanchéité. Une telle liaison est avantageusement située à proximité de la cavité annulaire où circule le flux d'air de refroidissement, ce qui la préserve de la dilatation thermique et lui procure une meilleure tenue mécanique.

Préférentiellement, la branche longitudinale extérieure de la bride de tuyère comporte un bord festonné de manière à apporter de la souplesse à la liaison entre la bride de tuyère et le panneau d'atténuation acoustique ainsi qu'à réduire la masse embarquée.

De préférence, la branche longitudinale intérieure de la bride de tuyère est séparée de la branche longitudinale intérieure de l'organe d'étanchéité par une lame d'air longitudinale. La lame d'air longitudinale agit avantageusement comme un isolant thermique qui réduit les transferts thermiques par conduction entre l'organe d'étanchéité et la bride de tuyère.

De préférence, la portion amont de la branche longitudinale intérieure de l'organe d'étanchéité comporte une épaisseur radiale inférieure ou égale à celle de la portion aval. Une telle portion amont augmente l'épaisseur radiale de la lame d'air longitudinale, ce qui réduit d'autant plus les échanges thermiques entre l'organe d'étanchéité et la bride de tuyère, sans augmenter l'encombrement.

De préférence également, la branche radiale de la bride de tuyère est séparée de la branche radiale de l'organe d'étanchéité par une lame d'air radiale. La lame d'air radiale agit avantageusement comme un isolant thermique qui réduit les transferts thermiques par conduction entre l'organe d'étanchéité et la bride de tuyère.

Selon un autre aspect, la branche radiale de la bride de tuyère est reliée à la branche radiale de l'organe d'étanchéité, ce qui permet un montage aisé de la bride de tuyère sur l'organe d'étanchéité. De manière préférée, la bride de tuyère ne comprend pas de branche longitudinale extérieure, c'est-à-dire que la bride de tuyère comprend uniquement une branche de fixation, une branche longitudinale intérieure et une branche radiale, pour réduire la masse, l'encombrement et le coût.

Selon un autre aspect, la branche longitudinale intérieure de la bride de tuyère est reliée à la branche longitudinale intérieure de l'organe d'étanchéité, ce qui permet un montage aisé de la bride de tuyère et de l'organe d'étanchéité au panneau d'atténuation acoustique. De manière préférée, la bride de tuyère ne comprend pas de branche longitudinale extérieure et de branche radiale, c'est-à-dire que la bride de tuyère comprend uniquement une branche de fixation et une branche longitudinale intérieure, pour réduire la masse, l'encombrement et le coût.

L'invention concerne aussi un ensemble d'une turbomachine et d'un organe de tuyère extérieur tel que décrit précédemment, ladite turbomachine s'étendant longitudinalement selon un axe X orienté d'amont en aval, ladite turbomachine comprenant au moins une veine primaire configurée pour conduire un flux primaire d'amont en aval et au moins une cavité annulaire d'axe X dans laquelle circule un flux d'air de refroidissement, ladite turbomachine comprenant au moins un carter de turbine monté selon l'axe X en amont de l'organe de tuyère extérieur et comprenant au moins une bride de carter de turbine s'étendant à l'aval du carter de turbine solidarisée à la bride de tuyère.

De préférence, la turbomachine se présente sous la forme d'un turboréacteur, préférentiellement d'aéronef.

De manière préférée, la branche longitudinale intérieure de l'organe d'étanchéité est séparée de la bride de carter de turbine par un jeu de montage calibré, de préférence inférieur à 2mm. Un tel jeu de montage calibré permet à l'organe d'étanchéité de réaliser une protection thermique continue et d'éviter tout contact lors du fonctionnement de la turbomachine, ce qui pourrait engendrer de l'usure localement.

L'invention concerne en outre un procédé de montage d'un ensemble d'une turbomachine et d'un organe de tuyère extérieur tel que décrit précédemment, ledit procédé de montage comprenant :
- au moins une première étape de fixation de l'organe d'étanchéité au panneau d'atténuation acoustique,
- au moins une deuxième étape de fixation de la bride de tuyère au panneau d'atténuation acoustique de manière à ce que la branche longitudinale intérieure de l'organe d'étanchéité s'étende de manière radialement intérieure à la bride de tuyère par rapport à l'axe X, afin de protéger thermiquement la bride de tuyère du flux primaire, et
- au moins une troisième étape de fixation de l'extrémité amont de la bride de tuyère à la bride de carter de turbine.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'un turboréacteur d'aéronef selon l'art antérieur ;
La figure 2 est une représentation schématique en demi-coupe longitudinale d'un organe de tuyère extérieur fixé à un carter de turbine de turboréacteur d'aéronef selon l'art antérieur ;
La figure 3 est une représentation schématique en demi-coupe longitudinale rapprochée de la figure 2 d'une bride de tuyère et d'un organe d'étanchéité de l'organe de tuyère extérieur selon l'art antérieur ;
La figure 4 est une représentation schématique en coupe longitudinale d'un turboréacteur d'aéronef selon l'invention ;
La figure 5 est une représentation schématique en demi-coupe longitudinale d'un organe de tuyère extérieur fixé à un carter de turbine de turboréacteur d'aéronef selon l'invention ;
La figure 6 est une représentation schématique en demi-coupe longitudinale rapprochée de la figure 5 d'une bride de tuyère et d'un organe d'étanchéité de l'organe de tuyère extérieur selon l'invention ;
La figure 7A et
La figure 7B sont des représentations schématiques en perspective de la branche de fixation de la bride de tuyère selon deux formes de réalisation de l'invention et
La figure 8,
La figure 9,
La figure 10,
La figure 11,
La figure 12 et
La figure 13 sont des représentations schématiques en demi-coupe longitudinale d'une bride de tuyère et d'un organe d'étanchéité respectivement selon une première, une deuxième, une troisième, une quatrième, une cinquième et une sixième formes de réalisation alternatives de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 4, comme déjà présenté dans le préambule, il est représenté un turboréacteur d'aéronef T à double flux s'étendant longitudinalement selon un axe X et permettant de déplacer l'aéronef à partir d'un flux d'air F entrant dans le turboréacteur T et circulant d'amont en aval. Par la suite, les adjectifs « longitudinal » et « radial » sont utilisés pour qualifier un objet comprenant respectivement au moins une composante longitudinale et au moins une composante radiale par rapport à l'axe X. Les termes « amont » et « aval » sont quant à eux définis par rapport à l'axe X orienté d'amont en aval. De même, les termes « intérieur » et « extérieur » sont définis selon la direction radiale par rapport à l'axe X.

Comme illustré sur la figure 4, le turboréacteur d'aéronef T comprend une veine primaire V1 radialement intérieure et une veine secondaire V2 radialement extérieure par rapport à l'axe X, configurées pour conduire selon l'axe X respectivement une partie radialement intérieure du flux d'air F, dite flux primaire F1, et une partie radialement extérieure du flux d'air F, dite flux secondaire F2.

Toujours en référence à la figure 4, le turboréacteur T comprend d'amont en aval une soufflante 12 pour comprimer et guider le flux d'air F vers la veine primaire V1 et la veine secondaire V2, un compresseur 13 permettant la compression du flux primaire F1, une chambre de combustion 14 de gaz avec le flux primaire F1 permettant de dégager l'énergie nécessaire à la mise en rotation d'aubes d'une turbine 15 entraînant elle-même en rotation le compresseur 13 et la soufflante 12. La turbine 15 comprend un carter de turbine délimitant de manière radialement extérieure la veine primaire V1.

Toujours en référence à la figure 4, un aéronef comprend également une tuyère 1, montée sur le carter de turbine en aval de la turbine 15, pour guider le flux primaire F1 hors du turboréacteur T. La tuyère 1 comprend un organe de tuyère intérieur 11 et un organe de tuyère extérieur 10 s'étendant de manière périphérique autour de l'axe X et délimitant respectivement de manière radialement intérieure et de manière radialement extérieure la veine primaire V1 en sortie du turboréacteur T. Le turboréacteur T comprend également une cavité annulaire 16 d'axe X séparant radialement la veine primaire V1 et la veine secondaire V2, dans laquelle circule un flux d'air de refroidissement Fr du turboréacteur T, en particulier, du compresseur 13. L'organe de tuyère extérieur 10 forme ainsi une cloison intérieure de la cavité annulaire 16.

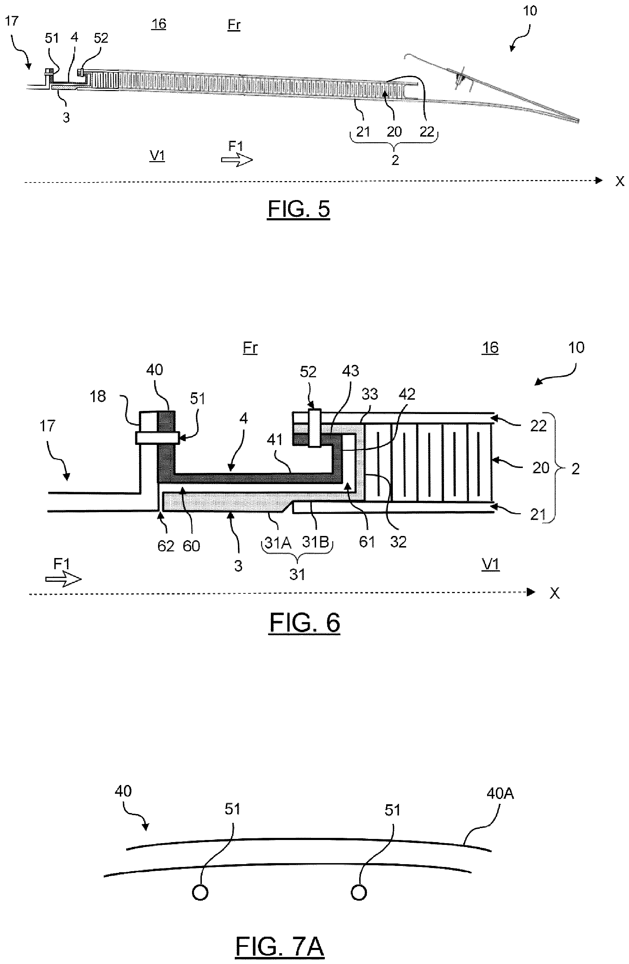

En référence aux figures 5 et 6, la figure 6 représentant une vue rapprochée de la figure 5, l'organe de tuyère extérieur 10 comprend une structure d'atténuation acoustique 20 du bruit émis par l'éjection du flux primaire F1, se présentant sous la forme d'une structure en nid d'abeille et comprenant une face intérieure et une face extérieure. L'organe de tuyère extérieur 10 comprend également une paroi intérieure 21 montée sur la face intérieure de la structure d'atténuation acoustique 20 et tournée vers la veine primaire V1 ainsi qu'une paroi extérieure 22 montée sur la face extérieure de la structure d'atténuation acoustique 20 et tournée vers la cavité annulaire 16. La paroi intérieure 21 comprend une pluralité d'orifices (non représentés) pour permettre la circulation du flux primaire F1 dans la structure d'atténuation acoustique 20, de manière à atténuer les ondes acoustiques émises lors de l'éjection du flux primaire F1. Par la suite, on désigne « panneau d'atténuation acoustique 2 » l'ensemble formé par la structure d'atténuation acoustique 20, la paroi intérieure 21 et la paroi extérieure 22. Le panneau d'atténuation acoustique 2 est périphérique d'axe X.

Selon l'invention, toujours en référence aux figures 5 et 6, l'organe de tuyère extérieur 10 comprend une bride de tuyère 4 et un organe d'étanchéité 3 configurés pour coopérer pour permettre le montage de l'organe de tuyère extérieur 10 sur le carter de turbine, et plus précisément sur une bride de carter de turbine 17 s'étendant à l'aval du carter de turbine. La bride de tuyère 4 et l'organe d'étanchéité 3 sont positionnés à l'amont du panneau d'atténuation acoustique 2. La bride de tuyère 4 et l'organe d'étanchéité 3 sont des pièces périphériques d'axe X. La bride de tuyère 4 est reliée au panneau d'atténuation acoustique 2 et comprend une extrémité amont configurée pour être reliée à la bride de carter de turbine 17. L'organe d'étanchéité 3 est quant à lui relié au panneau d'atténuation acoustique 2, d'une part pour protéger la structure d'atténuation acoustique 20, en particulier, sa partie amont, et d'autre part pour assurer l'étanchéité de la fixation entre l'organe de tuyère extérieur 10 et le carter de turbine, de manière à ce que le flux primaire F1 n'entre pas en contact avec le flux d'air de refroidissement Fr.

Dans cette forme de réalisation, l'organe d'étanchéité 3 comporte un alliage de titane de grande tenue mécanique et thermique tandis que la bride de tuyère 4 comporte de l'inconel, et notamment de l'inconel 718 de formule brute NiCr19Fe19Nb5Mo3. L'inconel possède avantageusement une grande tenue mécanique associée à un coût réduit, mais également un coefficient de dilatation thermique environ 1,5 fois supérieur à celui de l'organe d'étanchéité 3. Il va cependant de soi que la bride de tuyère 4 et/ou l'organe d'étanchéité 3 pourrait comporter un autre matériau. Selon l'invention, la bride de tuyère 4 comporte un matériau de coefficient de dilatation thermique supérieur à celui de l'organe d'étanchéité 3.

Comme illustré sur les figures 6 et 8 à 12, selon l'invention, l'organe d'étanchéité 3 comprend une branche longitudinale intérieure 31 qui s'étend de manière radialement intérieure à la bride de tuyère 4 par rapport à l'axe X afin de protéger thermiquement la bride intérieure à la bride de tuyère 4 par rapport à l'axe X afin de protéger thermiquement la bride de tuyère 4 du flux primaire F1, dont la température est de l'ordre de 600°C. La branche longitudinale intérieure 31 de l'organe d'étanchéité 3 agit ainsi comme une barrière thermique permettant d'éviter que la bride de tuyère 4 ne soit en contact direct avec le flux primaire F1. Ceci présente l'avantage de limiter les transferts thermiques entre le flux primaire F1 à haute température et la bride de tuyère 4, et ainsi de limiter la dilatation thermique de ladite bride de tuyère 4. La bride de tuyère 4 possède ainsi une meilleure tenue mécanique.

Comme présenté précédemment, la bride de tuyère 4 possède un coefficient de dilatation thermique supérieur à celui de l'organe d'étanchéité 3. Grâce à l'invention, la bride de tuyère 4 est protégée thermiquement du flux primaire F1 par l'organe d'étanchéité 3, la température de l'organe d'étanchéité 3 est globalement supérieure à celle de la bride de tuyère 4 de sorte que la bride de tuyère 4 et l'organe d'étanchéité 3 se dilatent de manière comparable.

De préférence, l'organe d'étanchéité 3 s'étend de manière périphérique autour de l'axe X, de manière à assurer un montage de tenue mécanique optimale. Il en va de même pour la bride de tuyère 4, ainsi que la bride de carter de turbine 17. Préférentiellement, un organe d'étanchéité 3 et/ou une bride de tuyère 4 et/ou une bride de carter de turbine 17 possède une structure monobloc pour une tenue mécanique optimale. Néanmoins, il va de soi que chaque élément pourrait être formé de secteurs angulaires.

On décrit par la suite plus précisément les aspects structurels et fonctionnels de l'organe d'étanchéité 3 et de la bride de tuyère 4 en référence à la figure 6 illustrant une première forme de réalisation de l'invention.

Comme illustré sur la figure 6, l'organe d'étanchéité 3 se présente sous la forme d'une pièce en U dont la concavité est tournée vers l'amont. Plus précisément, l'organe d'étanchéité 3 comprend une branche longitudinale intérieure 31 et une branche longitudinale extérieure 33 reliées par une branche radiale 32. Dans cet exemple, l'organe d'étanchéité 3 est relié au panneau d'atténuation acoustique 2, en particulier par brasage. La branche longitudinale intérieure 31 est reliée de manière radialement extérieure à la paroi intérieure 21 et la branche longitudinale extérieure 33 est reliée de manière radialement intérieure à la paroi extérieure 22. La branche radiale 32 est quant à elle reliée à une paroi latérale de la structure d'atténuation acoustique 20. De préférence, la branche longitudinale extérieure 33 de l'organe d'étanchéité 3 est en contact avec la paroi extérieure 22 sur toute sa longueur longitudinale, afin de limiter l'encombrement.

Dans l'exemple de la figure 6, la branche longitudinale intérieure 31 comprend une portion aval 31B radialement extérieure à la paroi intérieure 21 et une portion amont 31A s'étendant en saillie vers l'amont. La portion amont 31A s'étend dans la continuité de la paroi intérieure 21, de manière à protéger thermiquement la bride de tuyère 4 du flux primaire F1. Autrement dit, la portion amont 31A délimite de manière radialement extérieure la veine primaire V1 entre la bride de carter de turbine 17 et la paroi intérieure 21 et forme une barrière pour éviter le contact entre le flux primaire F1 et la bride de tuyère 4. Dans cet exemple, l'extrémité amont de la branche longitudinale intérieure 31 est située au voisinage immédiat de la bride de carter de turbine 17 comme illustré à la figure 6, ceux-ci étant séparés d'un jeu de montage calibré 62, de préférence inférieur à 2mm. Un tel jeu de montage calibré 62 permet d'éviter tout contact lors du fonctionnement du turboréacteur T sous l'effet de contraintes mécaniques. Un tel contact pourrait engendrer de l'usure sur la bride de carter de turbine 17 ou sur l'organe d'étanchéité 3, connue de l'homme du métier sous le terme de « fretting », ce qui n'est pas souhaitable.

Comme illustré sur la figure 6, la branche longitudinale extérieure 33 de l'organe d'étanchéité 3 et la paroi extérieure 22 du panneau d'atténuation acoustique 2 sont reliées par des organes de fixation aval 52, se présentant dans cet exemple sous la forme d'ensembles d'une vis et d'un écrou, c'est-à-dire, de boulonnages. Plus précisément, la branche longitudinale extérieure 33 et la paroi extérieure 22 comprennent chacun des orifices configurés pour recevoir les organes de fixation aval 52. Après montage, les organes de fixation aval 52 s'étendent radialement par rapport à l'axe X, autrement dit perpendiculairement à la branche longitudinale extérieure et la paroi extérieure 22 pour limiter le jeu de la fixation. Il va de soi que les organes de fixation aval 52 pourraient se présenter sous une autre forme. De tels organes de fixation aval 52 permettent avantageusement de solidariser l'organe d'étanchéité 3 et le panneau d'atténuation acoustique 2. L'organe d'étanchéité 3 sépare ainsi de manière étanche la veine primaire V1 et la cavité annulaire 16, de manière à éviter tout mélange entre le flux primaire F1 et le flux d'air de refroidissement Fr. De préférence, les organes de fixation aval 52 comportent de l'acier ou de l'inconel.

Comme illustré sur la figure 6, la bride de tuyère 4 comprend d'une part une extrémité amont configurée pour être reliée à la bride de carter de turbine 17 et d'autre part une extrémité aval reliée au panneau d'atténuation acoustique 2. Par ailleurs, la bride de tuyère 4 est montée de manière à ce que l'organe d'étanchéité 3 soit tourné vers la cavité annulaire 16 où circule le flux d'air de refroidissement Fr. L'organe d'étanchéité 3 est ainsi en contact du flux d'air de refroidissement Fr dont la température est de l'ordre de 300°C mais protégé du flux primaire F1 dont la température est de l'ordre de 600°C, ce qui limite sa dilatation thermique.

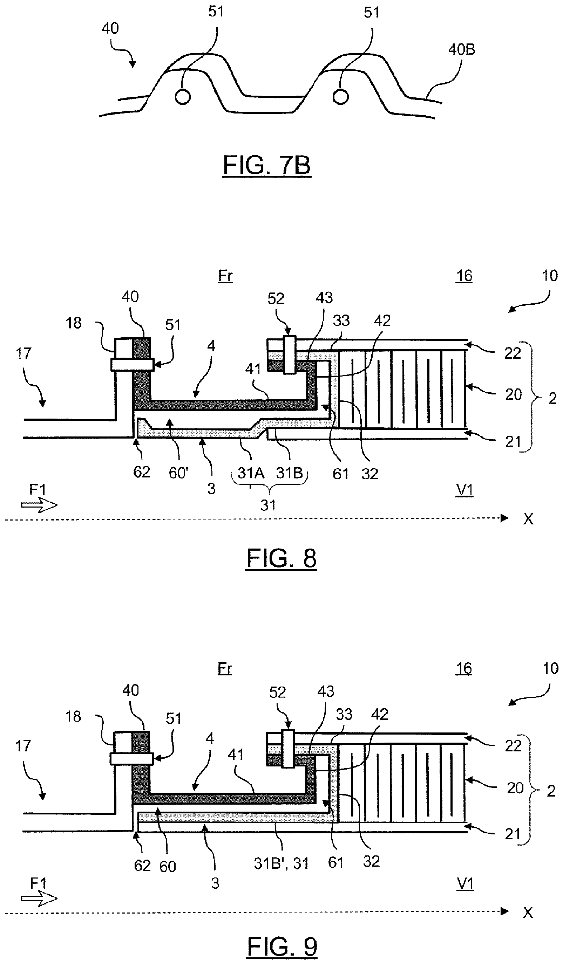

Dans l'exemple de la figure 6, l'extrémité amont de la bride de tuyère 4 se présente sous la forme d'une branche de fixation 40 s'étendant radialement par rapport à l'axe X et configurée pour être reliée à une branche de fixation 18 de la bride de carter de turbine 17, s'étendant également radialement par rapport à l'axe X et reliée à une branche longitudinale de la bride de carter de turbine 17. Plus précisément, comme illustré sur les figures 6, 7A et 7B, la branche de fixation 40 de la bride de tuyère 4 et la branche de fixation 18 de la bride de carter de turbine 17 sont configurées pour être reliées par des organes de fixation amont 51, se présentant dans cet exemple sous la forme d'ensembles d'une vis et d'un écrou montés dans des orifices. Après montage, les organes de fixation amont 51 s'étendent longitudinalement par rapport à l'axe X, autrement dit perpendiculairement aux branches de fixation 40, 18 pour limiter le jeu de la fixation. Préférentiellement, les organes de fixation amont 51 comportent de l'acier ou de l'inconel. Il va également de soi que les organes de fixation amont 51 pourraient se présenter sous une autre forme. En outre, il va de soi que l'extrémité amont pourrait se présenter sous une autre forme, en particulier configurée pour coopérer avec une bride de carter de turbine 17 de forme quelconque.

De préférence, comme illustré sur la figure 7B, la branche de fixation 40 de la bride de tuyère 4 comprend un bord festonné 40B, de manière à réduire la masse embarquée de l'aéronef. Il va cependant de soi que la branche de fixation 40 pourrait comprendre un bord droit 40A, comme représenté sur la figure 7A.

Comme illustré sur la figure 6, la bride de tuyère 4 comprend une branche longitudinale intérieure 41 reliée à la branche de fixation 40, une branche longitudinale extérieure 43 et une branche radiale 42 reliant la branche longitudinale intérieure 41 et la branche longitudinale extérieure 43. La branche longitudinale intérieure 41, la branche radiale 42 et la branche longitudinale extérieure 43 forment ensemble l'extrémité aval de la bride de tuyère 4.

Dans l'exemple de la figure 6, la branche longitudinale extérieure 43 de la bride de tuyère 4 est montée de manière radialement intérieure sur la branche longitudinale extérieure 33 de l'organe d'étanchéité 3 et reliée à la paroi extérieure 22 par les organes de fixation aval 52. La fixation entre la bride de tuyère 4 et le panneau d'atténuation acoustique 2 est ainsi réalisée entre la branche longitudinale extérieure 43 et la paroi extérieure 22, soumises avantageusement à des températures moins élevées que celles du flux primaire F1 grâce à la circulation du flux d'air de refroidissement Fr, ce qui réduit le niveau de contrainte mécanique dans l'organe de tuyère extérieur 10. De surcroît, les organes de fixation aval 52 relient avantageusement ensemble à la fois la bride de tuyère 4 et l'organe d'étanchéité 3 à la paroi extérieure 22, ce qui limite l'encombrement et améliore l'étanchéité. Il va cependant de soi que la bride de tuyère 4 et l'organe d'étanchéité 3 pourraient être reliés séparément au panneau d'atténuation acoustique 2. Par ailleurs, de manière analogue à la branche de fixation 40 de la figure 7B, la branche longitudinale extérieure 43 comprend de préférence un bord festonné, de manière à réduire la masse embarquée de l'aéronef. Il en va de même pour la branche longitudinale extérieure 33 de l'organe d'étanchéité 3 et/ou pour la paroi extérieure 22.

Toujours dans l'exemple de la figure 6, la branche longitudinale extérieure 43 s'étend axialement en saillie vers l'amont par rapport à la branche radiale 42. Autrement dit, l'extrémité aval de la bride de tuyère 4 possède une forme analogue à celle de l'organe d'étanchéité 3. De manière avantageuse, une telle forme permet un montage aisé des organes de fixation aval 52.

Toujours dans l'exemple de la figure 6, la branche longitudinale intérieure 41 de la bride de tuyère 4 est séparée de la branche longitudinale inférieure 31 de l'organe d'étanchéité 3 par une lame d'air longitudinale 60. De manière avantageuse, une telle lame d'air longitudinale 60 évite tout échange conductif entre la branche longitudinale intérieure 41 de la bride de tuyère 4 et la branche longitudinale intérieure 31 de l'organe d'étanchéité 3, qui est en contact avec le flux primaire F1 et possède donc une température élevée. La branche longitudinale intérieure 41 est par ailleurs soumise aux échanges convectifs avec le flux d'air de refroidissement Fr. La présence d'une lame d'air longitudinale 60 permet de former un volume d'isolation thermique entre le flux primaire F1 et le flux d'air de refroidissement Fr, de température proche de celle du flux primaire F1.

De manière avantageuse, cela permet de maintenir la branche longitudinale intérieure 41 à une température de l'ordre de 450°C, ce qui permet de réduire la dilatation de la bride de tuyère 4. De préférence, la lame d'air longitudinale 60 possède une épaisseur radiale comprise entre 1mm et 20mm, suffisamment grande pour éviter tout contact entre les branches longitudinales intérieures 31, 41 lors du fonctionnement du turboréacteur T sous l'effet de contraintes mécaniques, et suffisamment faible pour limiter l'encombrement.

De manière analogue, la branche radiale 42 de la bride de tuyère 4 est séparée de la branche radiale 32 de l'organe d'étanchéité 3 par une lame d'air radiale 61, reliée fluidiquement à la lame d'air longitudinale 60. De manière avantageuse, une telle lame d'air radiale 61 associée à la lame d'air longitudinale 60 limite le contact et donc les échanges conductifs entre la bride de tuyère 4 et l'organe d'étanchéité 3, à ceux au niveau des organes de fixation aval 52. La bride de tuyère 4 est donc avantageusement protégée efficacement des températures élevées par l'organe d'étanchéité 3. De préférence, la lame d'air radiale 61 possède une épaisseur longitudinale comprise entre 1 mm et 20mm, suffisamment grande pour éviter tout contact entre les branches radiales 32, 12 lors du fonctionnement du turboréacteur T sous l'effet des jeux d'assemblage et de dilatation induits, et suffisamment faible pour limiter l'encombrement.

On décrit par la suite des formes de réalisation alternatives de l'invention en référence aux figures 8 à 13, en mettant en exergue les différences structurelles et fonctionnelles par rapport à la forme de réalisation précédemment présentée. Il va de soi que l'invention ne se limite pas aux formes de réalisation décrites ici mais englobe toute combinaison possible des formes de réalisation présentées. Par ailleurs, l'ensemble des formes de réalisation décrites concernent un organe de tuyère extérieur 10 pour turboréacteur d'aéronef T. Il va cependant de soi qu'il pourrait s'agir d'un organe de tuyère extérieur 10 pour une turbomachine quelconque.

Dans l'exemple de la figure 8 illustrant une première forme de réalisation alternative, la branche longitudinale intérieure 31 de l'organe d'étanchéité 3 comprend une portion amont 31A' d'épaisseur réduite, c'est-à-dire qui comporte une épaisseur radiale inférieure ou égale à celle de la portion aval 31B. De manière avantageuse, une telle portion amont 31A' réduite augmente l'épaisseur radiale de la lame d'air longitudinale 60 et donc l'isolation sans augmenter l'encombrement. De préférence, la portion amont 31A' comporte un bord amont possédant une surépaisseur, de manière à éviter la circulation d'un flux primaire F1 important dans la lame d'air longitudinale 60. La portion amont 31A' et la portion aval 31B sont ainsi décalées radialement.

Dans l'exemple de la figure 9 illustrant une deuxième forme de réalisation alternative, la paroi intérieure 21 s'étend longitudinalement en saillie vers l'amont, de manière à ce que la bride de carter de turbine 17 et la paroi intérieure 21 soient uniquement séparées par un jeu de montage calibré. L'organe d'étanchéité 3 est ainsi radialement extérieur à la paroi intérieure 21. La branche longitudinale intérieure 31 est montée en contact avec la paroi intérieure 21 sur toute sa longueur longitudinale. De manière avantageuse, une telle paroi intérieure 21 permet un écoulement plus aérodynamique du flux primaire F1.

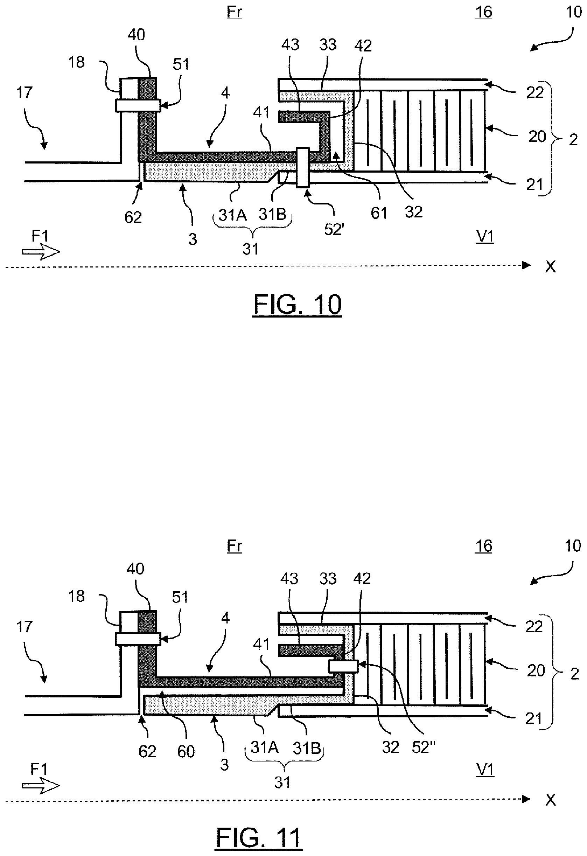

Dans l'exemple de la figure 10 illustrant une troisième forme de réalisation alternative, l'organe d'étanchéité 3 et la bride de tuyère 4 sont reliés à la paroi intérieure 21 du panneau d'atténuation acoustique 2. De manière plus précise, les organes de fixation aval 52' relient la branche longitudinale intérieure 31 de l'organe d'étanchéité 3, la branche longitudinale intérieure 41 de la bride de tuyère 4 et la paroi intérieure 21. Une telle liaison entre l'organe d'étanchéité 3, la bride de tuyère 4 et le panneau d'atténuation acoustique 2 présente l'avantage d'être facile à monter. Par ailleurs, dans cette troisième forme de réalisation, la bride de tuyère 4 pourrait ne pas comprendre de branche longitudinale extérieure 43 et de branche radiale 42, c'est-à-dire que la bride de tuyère 4 comprendrait uniquement une branche de fixation 40 et une branche longitudinale intérieure 41, et ce afin de réduire la masse, l'encombrement et le coût.

Dans l'exemple de la figure 11 illustrant une quatrième forme de réalisation alternative, l'organe d'étanchéité 3 et la bride de tuyère 4 sont reliés à une face radiale de la structure d'atténuation acoustique 20 du panneau d'atténuation acoustique 2. En particulier, les organes de fixation aval 52" relient la branche radiale 32 de l'organe d'étanchéité 3, la branche radiale 42 de la bride de tuyère 4 et la structure d'atténuation acoustique 20. Une telle liaison entre l'organe d'étanchéité 3, la bride de tuyère 4 et le panneau d'atténuation acoustique 2 présente l'avantage d'être facile à monter. Par ailleurs, dans cette quatrième forme de réalisation, la bride de tuyère 4 pourrait ne pas comprendre de branche longitudinale extérieure 43, c'est-à-dire que la bride de tuyère 4 comprendrait uniquement une branche de fixation 40, une branche longitudinale intérieure 41 et une branche radiale 42, et ce afin de réduire la masse, l'encombrement et le coût.

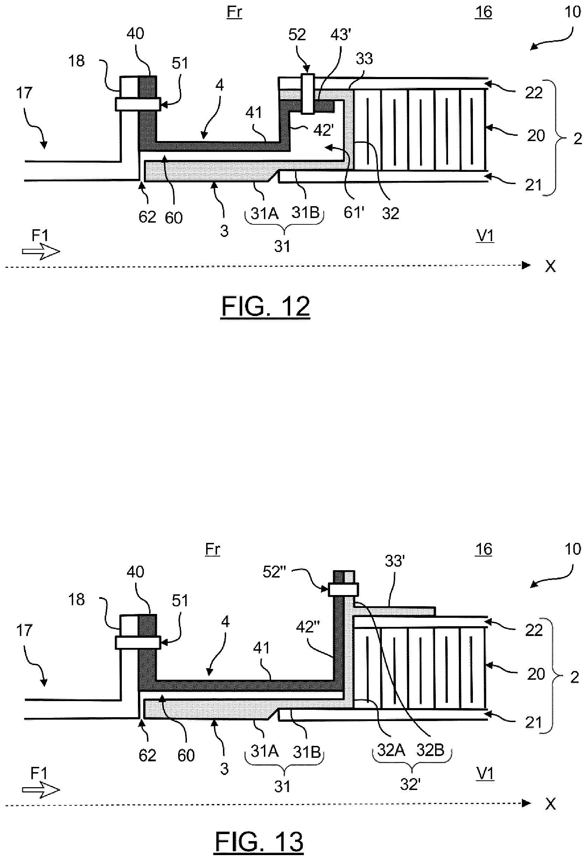

Dans l'exemple de la figure 12 illustrant une cinquième forme de réalisation alternative, l'organe d'étanchéité 3 et la bride de tuyère 4 sont reliés à la paroi extérieure 22 du panneau d'atténuation acoustique 2, comme pour la première forme de réalisation illustrée à la figure 6. La branche longitudinale extérieure 43' de la bride de tuyère 4 s'étend axialement en saillie vers l'aval par rapport à la branche radiale 42' et non vers l'amont comme illustré à la figure 6. Autrement dit, l'extrémité aval de la bride de tuyère 4 se présente sous la forme d'une structure en escalier ou en Z et non d'une structure en U dont la concavité est tournée vers l'amont, comme décrit pour la forme de réalisation de la figure 6. De manière avantageuse, une telle branche longitudinale extérieure 43' permet d'assouplir la liaison au niveau des organes de fixation aval 52. En particulier, une telle liaison possède une souplesse radiale plus importante, ce qui permet de supporter un écart de dilatation thermique plus important entre la bride de tuyère 4 et le panneau d'atténuation acoustique 2. De manière analogue à la figure 12, la branche longitudinale extérieure 43' de la bride de tuyère 4 est reliée à la branche longitudinale extérieure 33 de l'organe d'étanchéité 3 et à la paroi extérieure 22 par les organes de fixation aval 52.

Dans l'exemple de la figure 13 illustrant une sixième forme de réalisation alternative, l'organe d'étanchéité 3 et la bride de tuyère 4 sont reliés entre eux de manière radiale, de même que pour la quatrième forme de réalisation alternative illustrée sur la figure 11. Toutefois, contrairement à l'exemple de la figure 11, le panneau d'atténuation acoustique 2 n'est pas relié par les organes de fixation aval 52" à l'organe d'étanchéité 3 et la bride de tuyère 4. Plus précisément, la branche longitudinale extérieure 33' de l'organe d'étanchéité 3 s'étend de manière radialement extérieure en contact avec la paroi extérieure 22 et la branche radiale 32' de l'organe d'étanchéité s'étend en saillie par rapport à ladite branche longitudinale extérieure 33'. Autrement dit, la branche radiale 32' comprend une portion radialement intérieure 32A et une portion radialement extérieure 32B par rapport à la branche longitudinale extérieure 33' de l'organe d'étanchéité 3. Les organes de fixation aval 52" relient quant à eux la branche radiale 32' de l'organe d'étanchéité 3 et la branche radiale 42" de la bride de tuyère 4 au niveau de la portion radialement extérieure 32B. De tels organes de fixation aval 52" possèdent avantageusement une bonne tenue mécanique, étant situés au niveau de la cavité annulaire 16 où circule le flux d'air de refroidissement Fr. De préférence, la bride de tuyère 4 ne comporte pas de branche longitudinale extérieure 43 dans cette forme de réalisation, pour limiter l'encombrement.

On décrit par la suite un procédé de montage de l'ensemble d'un turboréacteur d'aéronef T et d'un organe de tuyère extérieure 10, tels que décrits précédemment. Selon l'invention, un tel procédé de montage comprend trois étapes de fixation successives qui sont détaillées ci-après.

Lors d'une première étape de fixation, l'organe d'étanchéité 3 est relié au panneau d'atténuation acoustique 2. En pratique, l'organe d'étanchéité 3 est brasé à la paroi intérieure 21 et à la paroi extérieure 22. A la fin de la première étape de fixation, la branche longitudinale intérieure 31 de l'organe d'étanchéité 3 est montée de manière radialement extérieure sur la paroi intérieure 21, la branche longitudinale extérieure 33 est montée de manière radialement intérieure sur la paroi extérieure 22 et la branche radiale 32 est en contact avec la structure d'atténuation acoustique 20.

Lors d'une deuxième étape de fixation, la bride de tuyère 4 est reliée au panneau d'atténuation acoustique 2 de manière radialement extérieure à la branche longitudinale intérieure 31 de l'organe d'étanchéité 3. Pour cela, l'extrémité aval de la bride de tuyère 4 est reliée ensemble avec l'organe d'étanchéité 3 au panneau d'atténuation acoustique 2, au moyen des organes de fixation aval 52. A la fin de la deuxième étape de fixation, les organes de fixation aval 52 maintiennent solidairement le panneau d'atténuation acoustique 2, l'organe d'étanchéité 3 et la bride de tuyère 4.

Lors d'une troisième étape de fixation, la bride de tuyère 4 est reliée à la bride de carter de turbine 17. Plus précisément, l'extrémité amont de la bride de tuyère 4 est reliée à la bride de carter de turbine 17 par des organes de fixation amont 51. A l'issue de la troisième étape de fixation, l'organe de tuyère extérieur 10 est solidaire du carter de turbine.

Grâce à l'invention, un alliage de coût réduit et de coefficient de dilatation thermique plus important qu'un alliage de titane résistant aux hautes températures peut être utilisé pour réaliser la bride de tuyère 4, sans affecter le raccord entre l'organe de tuyère extérieur 10 et le carter de turbine. Pour cela, la branche longitudinale intérieure 31 de l'organe d'étanchéité 3 est avantageusement montée de manière radialement intérieure à la bride de tuyère 4, la protégeant thermiquement du flux primaire F1. La bride de tuyère 4 est ainsi soumise à une température moins élevée que celle de l'organe d'étanchéité 3, ce qui limite la dilatation différentielle entre ladite bride de tuyère 4 et l'organe d'étanchéité 3. Le niveau de contrainte mécanique observé au niveau de la liaison est donc fortement réduit. L'invention permet également, suivant les formes de réalisation, d'améliorer l'aérodynamisme de la veine primaire V1 et d'augmenter la souplesse du raccord entre l'organe de tuyère extérieur 10 et le carter de turbine.

## Revendications

1. Organe de tuyère extérieur (10) pour turbomachine s'étendant longitudinalement selon un axe (X) orienté d'amont en aval, ladite turbomachine comprenant au moins une veine primaire (V1) configurée pour conduire un flux primaire (F1) d'amont en aval et au moins une cavité annulaire (16) d'axe (X) dans laquelle circule un flux d'air de refroidissement (Fr), ladite turbomachine comprenant au moins un carter de turbine monté selon l'axe (X) en amont de l'organe de tuyère extérieur (10) et comprenant au moins une bride de carter de turbine (17) s'étendant à l'aval du carter de turbine, ledit organe de tuyère extérieur (10) étant configuré pour délimiter de manière radialement extérieure la veine primaire (V1) par rapport à l'axe (X) en sortie de la turbomachine, ledit organe de tuyère extérieur (10) comprenant :
- au moins une structure d'atténuation acoustique (20) comprenant une face intérieure et une face extérieure,
- au moins une paroi intérieure (21) montée sur la face intérieure de la structure d'atténuation acoustique (20) et tournée vers la veine primaire (V1) et
- au moins une paroi extérieure (22) montée sur la face extérieure de la structure d'atténuation acoustique (20) et tournée vers la cavité annulaire (16), ladite structure d'atténuation acoustique (20), ladite paroi intérieure (21) et ladite paroi extérieure (22) formant un panneau d'atténuation acoustique (2),
- au moins une bride de tuyère (4) reliée au panneau d'atténuation acoustique (2) et comprenant au moins une extrémité amont configurée pour être reliée à la bride de carter de turbine (17) et
- au moins un organe d'étanchéité (3) relié au panneau d'atténuation acoustique (2) et comprenant au moins une branche longitudinale intérieure (31) par rapport à l'axe (X),
- organe de tuyère extérieur **caractérisé par le fait que** la branche longitudinale intérieure (31) de l'organe d'étanchéité (3) s'étend de manière radialement intérieure à la bride de tuyère (4) par rapport à l'axe (X), de manière à protéger thermiquement ladite bride de tuyère (4) du flux primaire (F1), la bride de tuyère (4) étant réalisée dans un premier matériau et l'organe d'étanchéité (3) étant réalisé dans un deuxième matériau, le premier matériau possédant un coefficient de dilatation thermique supérieur à celui du deuxième matériau.

2. Organe de tuyère extérieur (10) selon la revendication 1, dans lequel le premier matériau possède un coefficient de dilatation thermique supérieur à celui du deuxième matériau d'au moins 25%, de préférence supérieur d'au plus 75%.

3. Organe de tuyère extérieur (10) selon l'une des revendications 1 et 2, dans lequel l'organe d'étanchéité (3) et la bride de tuyère (4) sont reliés ensemble au panneau d'atténuation acoustique (2).

4. Organe de tuyère extérieur (10) selon l'une des revendications 1 à 3, dans lequel la branche longitudinale intérieure (31) de l'organe d'étanchéité (3) comprend au moins une portion aval (31B, 31B') montée de manière radialement extérieure à la paroi intérieure (21) par rapport à l'axe (X).

5. Organe de tuyère extérieur (10) selon la revendication 4, dans lequel la branche longitudinale intérieure (31) de l'organe d'étanchéité (3) comprend au moins une portion amont (31A, 31A') s'étendant dans la continuité de la paroi intérieure (21) en saillie vers l'amont, de préférence jusqu'à la position axiale de l'extrémité amont de la bride de tuyère (4).

6. Organe de tuyère extérieur (10) selon la revendication 4, dans lequel la paroi intérieure (21) s'étend en saillie vers l'amont, de préférence jusqu'à la position axiale de l'extrémité amont de la bride de tuyère (4).

7. Organe de tuyère extérieur (10) selon l'une des revendications 1 à 6, dans lequel l'organe d'étanchéité (3) comprend au moins une branche longitudinale extérieure (33) montée de manière radialement intérieure à la paroi extérieure (22) par rapport à l'axe (X) et au moins une branche radiale (32) reliant ladite branche longitudinale extérieure (33) et la branche longitudinale intérieure (31) de l'organe d'étanchéité (3).

8. Organe de tuyère extérieur (10) selon l'une des revendications 1 à 7, dans lequel la bride de tuyère (4) comprend au moins une branche longitudinale intérieure (41) reliée à l'extrémité amont, au moins une branche longitudinale extérieure (43, 43') et au moins une branche radiale (42, 42') reliant la branche longitudinale intérieure (41) et la branche longitudinale extérieure (43, 43') de la bride de tuyère (4) par rapport à l'axe (X).

9. Organe de tuyère extérieur (10) selon la revendication 8, dans lequel la branche longitudinale extérieure (43) de la bride de tuyère (4) s'étend en saillie vers l'amont par rapport à la branche radiale (42, 42') de la bride de tuyère (4).

10. Organe de tuyère extérieur (10) selon la revendication 8, dans lequel la branche longitudinale extérieure (43') de la bride de tuyère (4) s'étend en saillie vers l'aval par rapport à la branche radiale (42, 42') de la bride de tuyère (4).

11. Organe de tuyère extérieur (10) selon l'une des revendications 8 à 10, dans lequel la branche longitudinale extérieure (43, 43') de la bride de tuyère (4) est reliée à la branche longitudinale extérieure (33) de l'organe d'étanchéité (3).

12. Organe de tuyère extérieur (10) selon l'une des revendications 8 à 11, dans lequel la branche longitudinale intérieure (41) de la bride de tuyère (4) est séparée de la branche longitudinale intérieure (31) de l'organe d'étanchéité (3) par une lame d'air longitudinale (60, 60').

13. Organe de tuyère extérieur (10) selon l'une des revendications 8 à 12, dans lequel la branche radiale (42, 42') de la bride de tuyère (4) est séparée de la branche radiale (32) de l'organe d'étanchéité (3) par une lame d'air radiale (61, 61').

14. Ensemble d'une turbomachine et d'un organe de tuyère extérieur (10) selon l'une des revendications 1 à 13, ladite turbomachine s'étendant longitudinalement selon un axe (X) orienté d'amont en aval, ladite turbomachine comprenant au moins une veine primaire (V1) configurée pour conduire un flux primaire (F1) d'amont en aval et au moins une cavité annulaire (16) d'axe (X) dans laquelle circule un flux d'air de refroidissement (Fr), ladite turbomachine comprenant au moins un carter de turbine monté selon l'axe (X) en amont de l'organe de tuyère extérieur (10) et comprenant au moins une bride de carter de turbine (17) s'étendant à l'aval du carter de turbine solidarisée à la bride de tuyère (4).

15. Ensemble d'une turbomachine et d'un organe de tuyère extérieur (10) selon la revendication 14, dans lequel la branche longitudinale intérieure (31) de l'organe d'étanchéité (3) est séparée de la bride de carter de turbine (17) par un jeu de montage calibré (62), de préférence inférieur à 2mm.

16. Procédé de montage d'un ensemble d'une turbomachine et d'un organe de tuyère extérieur (10) selon l'une des revendications 14 et 15, ledit procédé de montage comprenant :
- au moins une première étape de fixation de l'organe d'étanchéité (3) au panneau d'atténuation acoustique (2),
- au moins une deuxième étape de fixation de la bride de tuyère (4) au panneau d'atténuation acoustique (2) de manière à ce que la branche longitudinale intérieure (31) de l'organe d'étanchéité (3) s'étende de manière radialement intérieure à la bride de tuyère (4) par rapport à l'axe (X), afin de protéger thermiquement la bride de tuyère (4) du flux primaire (F1), et
- au moins une troisième étape de fixation de l'extrémité amont de la bride de tuyère (4) à la bride de carter de turbine (17).

## Patentansprüche

1. Außendüsenelement (10) für eine Turbomaschine, die sich längs gemäß einer von stromaufwärts nach stromabwärts ausgerichteten Achse (X) erstreckt, wobei die Turbomaschine mindestens einen Primärkanal (V1) umfasst, der dazu ausgelegt ist, einen Primärstrom (F1) von stromaufwärts nach stromabwärts zu führen und mindestens einen ringförmigen Hohlraum (16) mit der Achse (X), in dem ein Kühlluftstrom (Fr) zirkuliert, wobei die Turbomaschine mindestens ein Turbinengehäuse umfasst, das gemäß der Achse (X) stromaufwärts vom Außendüsenelement (10) angebracht ist und mindestens einen Turbinengehäuseflansch (17) umfasst, der sich stromabwärts vom Turbinengehäuse erstreckt, wobei das Außendüsenelement (10) dazu ausgelegt ist, den Primärkanal (V1) im Verhältnis zur Achse (X) am Ausgang der Turbomaschine radial außen zu begrenzen, wobei das Außendüsenelement (10) umfasst:
- mindestens eine Schalldämpfungsstruktur (20), die eine Innenfläche und eine Außenfläche umfasst,
- mindestens eine Innenwand (21), die auf der Innenfläche der Schalldämpfungsstruktur (20) angebracht ist und zum Primärkanal (V1) zeigt, und
- mindestens eine Außenwand (22), die auf der Außenfläche der Schalldämpfungsstruktur (20) angebracht ist und zum ringförmigen Hohlraum (16) zeigt, wobei die Schalldämpfungsstruktur (20), die Innenwand (21) und die Außenwand (22) eine Schalldämpfungsplatte (2) bilden,
- mindestens einen Düsenflansch (4), der mit der Schalldämpfungsplatte (2) verbunden ist und mindestens ein stromaufwärtiges Ende umfasst, das dazu ausgelegt ist, mit dem Turbinengehäuseflansch (17) verbunden zu sein und
- mindestens ein Dichtungsorgan (3), das mit der Schalldämpfungsplatte (2) verbunden ist und mindestens einen im Verhältnis zur Achse (X) inneren Längsschenkel (31) umfasst,
wobei das Außendüsenelement **dadurch gekennzeichnet ist, dass** sich der innere Längsschenkel (31) des Dichtungsorgans (3) radial innen am Düsenflansch (4) im Verhältnis zur Achse (X) derart erstreckt, dass der Düsenflansch (4) vor dem Primärstrom (F1) thermisch geschützt ist, wobei der Düsenflansch (4) aus einem ersten Material hergestellt ist und das Dichtungsorgan (3) aus einem zweiten Material hergestellt ist, wobei das erste Material einen Wärmeausdehnungskoeffizienten besitzt, der größer als der des zweiten Materials ist.

2. Außendüsenelement (10) nach Anspruch 1, wobei das erste Material einen Wärmeausdehnungskoeffizienten besitzt, der um mindestens 25 % größer, vorzugsweise um höchstens 75 % größer als der des zweiten Materials ist.

3. Außendüsenelement (10) nach einem der Ansprüche 1 und 2, wobei das Dichtungsorgan (3) und der Düsenflansch (4) gemeinsam mit der Schalldämpfungsplatte (2) verbunden sind.

4. Außendüsenelement (10) nach einem der Ansprüche 1 bis 3, wobei der innere Längsschenkel (31) des Dichtungsorgans (3) mindestens einen stromabwärtigen Abschnitt (31B, 31B') umfasst, der radial außen an der Innenwand (21) im Verhältnis zur Achse (X) angebracht ist.

5. Außendüsenelement (10) nach Anspruch 4, wobei der innere Längsschenkel (31) des Dichtungsorgans (3) mindestens einen stromaufwärtigen Abschnitt (31A, 31A') umfasst, der sich in der Kontinuität der Innenwand (21) hervorstehend nach stromaufwärts vorzugsweise bis zu der axialen Position des stromaufwärtigen Endes des Düsenflanschs (4) erstreckt.

6. Außendüsenelement (10) nach Anspruch 4, wobei sich die Innenwand (21) hervorstehend nach stromaufwärts vorzugsweise bis zu einer axialen Position des stromaufwärtigen Endes des Düsenflanschs (4) erstreckt.

7. Außendüsenelement (10) nach einem der Ansprüche 1 bis 6, wobei das Dichtungsorgan (3) mindestens einen äußeren Längsschenkel (33) umfasst, der radial innen an der Außenwand (22) im Verhältnis zur Achse (X) angebracht ist und mindestens einen radialen Schenkel (32), der den äußeren Längsschenkel (33) und den inneren Längsschenkel (31) des Dichtungsorgans (3) verbindet.

8. Außendüsenelement (10) nach einem der Ansprüche 1 bis 7, wobei der Düsenflansch (4) mindestens einen inneren Längsschenkel (41) umfasst, der am stromaufwärtigen Ende verbunden ist, mindestens einen äußeren Längsschenkel (43, 43') und mindestens einen radialen Schenkel (42, 42'), der den inneren Längsschenkel (41) und den äußeren Längsschenkel (43, 43') des Düsenflanschs (4) im Verhältnis zur Achse (X) verbindet.

9. Außendüsenelement (10) nach Anspruch 8, wobei sich der äußere Längsschenkel (43) des Düsenflanschs (4) im Verhältnis zum radialen Schenkel (42, 42') des Düsenflanschs (4) nach stromaufwärts hervorstehend erstreckt.

10. Außendüsenelement (10) nach Anspruch 8, wobei sich der äußere Längsschenkel (43') des Düsenflanschs (4) im Verhältnis zum radialen Schenkel (42, 42') des Düsenflanschs (4) hervorstehend nach stromabwärts erstreckt.

11. Außendüsenelement (10) nach einem der Ansprüche 8 bis 10, wobei der äußere Längsschenkel (43, 43') des Düsenflanschs (4) mit dem äußeren Längsschenkel (33) des Dichtungsorgans (3) verbunden ist.

12. Außendüsenelement (10) nach einem der Ansprüche 8 bis 11, wobei der innere Längsschenkel (41) des Düsenflanschs (4) vom inneren Längsschenkel (31) des Dichtungsorgans (3) durch einen länglichen Luftspalt (60, 60') getrennt ist.

13. Außendüsenelement (10) nach einem der Ansprüche 8 bis 12, wobei der radiale Schenkel (42, 42') des Düsenflanschs (4) vom radialen Schenkel (32) des Dichtungsorgans (3) durch einen radialen Luftspalt (61, 61') getrennt ist.

14. Anordnung aus einer Turbomaschine und einem Außendüsenelement (10) nach einem der Ansprüche 1 bis 13, wobei sich die Turbomaschine längs gemäß einer von stromaufwärts nach stromabwärts ausgerichteten Achse (X) erstreckt, wobei die Turbomaschine mindestens einen Primärkanal (V1) umfasst, der dazu ausgelegt ist, einen Primärstrom (F1) von stromaufwärts nach stromabwärts zu führen und mindestens einen ringförmigen Hohlraum (16) mit der Achse (X), in dem ein Kühlluftstrom (Fr) zirkuliert, wobei die Turbomaschine mindestens ein Turbinengehäuse umfasst, das gemäß der Achse (X) stromaufwärts vom Außendüsenelement (10) angebracht ist und mindestens einen mit dem Turbinenflansch (4) fest verbundenen Turbinengehäuseflansch (17) umfasst, der sich stromabwärts vom Turbinengehäuse erstreckt.

15. Anordnung aus einer Turbomaschine und einem Außendüsenelement (10) nach Anspruch 14, wobei der innere Längsschenkel (31) des Dichtungsorgans (3) vom Turbinengehäuseflansch (17) durch ein kalibriertes Montagespiel (62) vorzugsweise unter 2 mm getrennt ist.

16. Verfahren zur Montage einer Anordnung aus einer Turbomaschine und einem Außendüsenelement (10) nach einem der Ansprüche 14 und 15, wobei das Montageverfahren umfasst:
- mindestens einen ersten Schritt des Befestigens des Dichtungsorgans (3) an der Schalldämpfungsplatte (2),
- mindestens einen zweiten Schritt des Befestigens des Düsenflanschs (4) an der Schalldämpfungsplatte (2) derart, dass sich der innere Längsschenkel (31) des Dichtungsorgans (3) radial innen am Düsenflansch (4) im Verhältnis zur Achse (X) erstreckt, um den Düsenflansch (4) vor dem Primärstrom (F1) thermisch zu schützen, und
- mindestens einen dritten Schritt des Befestigens des stromaufwärtigen Endes des Düsenflanschs (4) am Turbinengehäuseflansch (17).

## Claims

1. An external nozzle member (10) for a turbomachine longitudinally extending along an axis (X) oriented from upstream to downstream, said turbomachine comprising at least one primary stream (V1) configured to conduct a primary flow (F1) from upstream to downstream and at least one annular cavity (16) of axis (X) in which a cooling air flow (Fr) circulates, said turbomachine comprising at least one turbine casing mounted along the axis (X) upstream of the external nozzle member (10) and comprising at least one turbine casing flange (17) extending downstream of the turbine casing, said external nozzle member (10) being configured so as to radially externally delimit the primary stream (V1) with respect to the axis (X) at the outlet of the turbomachine, said external nozzle member (10) comprising
- at least one acoustic attenuation structure (20) comprising an internal face and an external face,
- at least one internal wall (21) mounted to the internal face of the acoustic attenuation structure (20) and facing the primary stream (V1) and
- at least one external wall (22) mounted to the external face of the acoustic attenuation structure (20) and facing the annular cavity (16), said acoustic attenuation structure (20), said internal wall (21) and said external wall (22) forming an acoustic attenuation panel (2),
- at least one nozzle flange (4) connected to the acoustic attenuation panel (2) and comprising at least one upstream end configured to be connected to the turbine casing flange (17) and
- at least one sealing member (3) connected to the acoustic attenuation panel (2) and comprising at least one internal longitudinal branch (31) with respect to the axis (X),
- the external nozzle member being **characterized in that** the internal longitudinal branch (31) of the sealing member (3) radially internally extends to the nozzle flange (4) with respect to the axis (X), so as to thermally protect said nozzle flange (4) from the primary flow (F1), the nozzle flange (4) being made of a first material and the sealing member (3) being made of a second material, the first material having a higher coefficient of thermal expansion than the second material.

2. The external nozzle member (10) according to claim 1, wherein the first material has a higher coefficient of thermal expansion than the second material by at least 25%, preferably higher by at most 75%.

3. The external nozzle member (10) according to one of claims 1 to 2, wherein the sealing member (3) and the nozzle flange (4) are connected together to the acoustic attenuation panel (2).

4. The external nozzle member (10) according to one of claims 1 to 3, wherein the internal longitudinal branch (31) of the sealing member (3) comprises at least one downstream portion (31B, 31B') radially externally mounted to the internal wall (21) with respect to the axis (X).

5. The external nozzle member (10) according to claim 4, wherein the internal longitudinal branch (31) of the sealing member (3) comprises at least one upstream portion (31A, 31A') extending in continuity with the internal wall (21) upstream projecting, preferably to the axial position of the upstream end of the nozzle flange (4).

6. The external nozzle member (10) according to claim 4, wherein the internal wall (21) upstream projectingly extends, preferably to the axial position of the upstream end of the nozzle flange (4).

7. The external nozzle member (10) according to one of claims 1 to 6, wherein the sealing member (3) comprises at least one external longitudinal branch (33) radially internally mounted to the external wall (22) with respect to the axis (X) and at least one radial branch (32) connecting said external longitudinal branch (33) and the internal longitudinal branch (31) of the sealing member (3).

8. The external nozzle member (10) according to one of claims 1 to 7, wherein the nozzle flange (4) comprises at least one internal longitudinal branch (41) connected to the upstream end, at least one external longitudinal branch (43, 43') and at least one radial branch (42, 42') connecting the internal longitudinal branch (41) and the external longitudinal branch (43, 43') of the nozzle flange (4) with respect to the axis (X).

9. The external nozzle member (10) according to claim 8, wherein the external longitudinal branch (43) of the nozzle flange (4) upstream projectingly extends from the radial branch (42, 42') of the nozzle flange (4).

10. The external nozzle member (10) according to claim 8, wherein the external longitudinal branch (43') of the nozzle flange (4) downstream projectingly extends from the radial branch (42, 42') of the nozzle flange (4).

11. The external nozzle member (10) according to one of claims 8 to 10, wherein the external longitudinal branch (43, 43') of the nozzle flange (4) is connected to the external longitudinal branch (33) of the sealing member (3).

12. The external nozzle member (10) according to one of claims 8 to 11, wherein the internal longitudinal branch (41) of the nozzle flange (4) is separated from the internal longitudinal branch (31) of the sealing member (3) by a longitudinal air gap (60, 60').

13. The external nozzle member (10) according to one of claims 8 to 12, wherein the radial branch (42, 42') of the nozzle flange (4) is separated from the radial branch (32) of the sealing member (3) by a radial air gap (61, 61').

14. An assembly of a turbomachine and of an external nozzle member (10) according to one of claims 1 to 13, said turbomachine longitudinally extending along an axis (X) oriented from upstream to downstream, said turbomachine comprising at least one primary stream (V1) configured to conduct a primary flow (F1) from upstream to downstream and at least one annular cavity (16) of axis (X) in which a cooling air flow (Fr) circulates, said turbomachine comprising at least one turbine casing mounted along the axis (X) upstream of the external nozzle member (10) and comprising at least one turbine casing flange (17) extending downstream of the turbine casing and secured to the nozzle flange (4).

15. The assembly of a turbomachine and an external nozzle member (10) according to claim 14, wherein the internal longitudinal branch (31) of the sealing member (3) is separated from the turbine casing flange (17) by a calibrated mounting clearance (62), preferably less than 2mm.

16. A method for mounting an assembly of a turbomachine and of an external nozzle member (10) according to one of claims 14 and 15, said mounting method comprising:
- at least one first step of attaching the sealing member (3) to the acoustic attenuation panel (2),
- at least one second step of attaching the nozzle flange (4) to the acoustic attenuation panel (2) so that the internal longitudinal branch (31) of the sealing member (3) radially internally extends to the nozzle flange (4) with respect to the axis (X), in order to thermally protect the nozzle flange (4) from the primary flow (F1), and
- at least one third step of attaching the upstream end of the nozzle flange (4) to the turbine casing flange (17).
